# EUROPEAN PATENT SPECIFICATION

(11) **EP 0 548 983 B1**
(45) Date of publication and mention of the grant of the patent: **16.07.1997**
(21) Application number: 92121974.7
(22) Date of filing: 24.12.1992
(51) Int. Cl.: G01N 15/14

(54) **Method for determining reticulocytes**
Verfahren zur Bestimmung von Retikulozyten
Procédé de détermination de réticulocytes

(30) Priority: 27.12.1991 JP 347104/91; 13.11.1992 JP 303814/92
(43) Date of publication of application: 30.06.1993
(73) Proprietor: TOA MEDICAL ELECTRONICS CO., LTD., Kobe-shi Hyogo-ken (JP)
(72) Inventor: Takarada, Kaoru, Miki-shi, Hyogo-ken (JP); Kubota, Fumio, Higashinada-ku, Kobe-shi, Hyogo-ken (JP)
(74) Representative: Hansen, Bernd, Dr.Dipl.-Chem.

(56) References cited:
- EP-A- 0 121 261
- EP-A- 0 425 381
- WO-A-87/00282
- US-A- 4 198 160
- US-A- 4 325 706
- US-A- 4 985 174
- US-A- 5 006 986

## Description

This invention relates to a method for determining characteristics of a group of particles in which particles such as biological cells flow through a detection area in an aligned manner so as to simultaneously detect electrical characteristics and optical characteristics with respect to individual particles. In particular, this invention relates to a method by which distribution form of reticulocytes may be accurately determined.

A flow cytometry method, for example, is known in the art as a method for analyzing particles, such as blood cells. In the flow cytometry method, particles are flown in a sheathed flow, so as to detect scattering light or fluorescence emitted from a particle passing through an area illuminated by light beam.

Japanese Patent Public Disclosure No. 1-308964 discloses a method for classifying reticulocytes particles into groups by means of a two-dimensional particle size distribution diagram which utilizes relative intensity of forward scattering light and relative intensity of fluorescence as coordinate axis. Such intensities are obtained by passing blood specimen stained with a fluorescent dye through a flow cell so as to measure forward scattering light and fluorescence by mean of a flow cytometer.

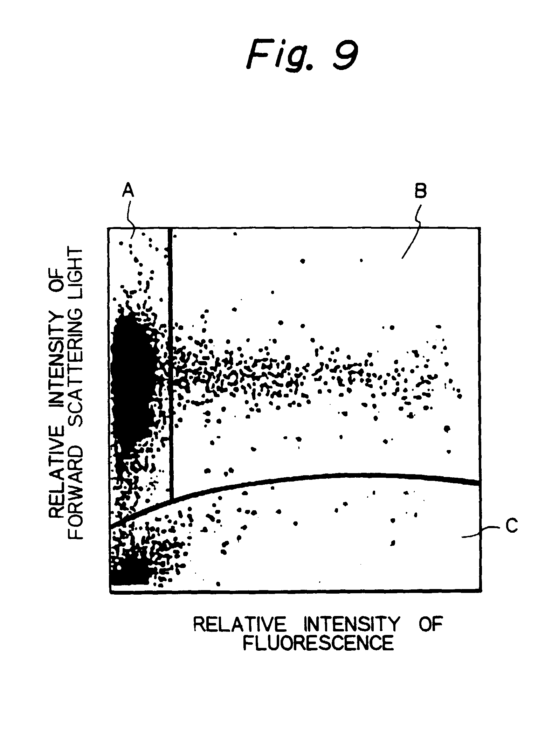

Fig. 9 shows such a two-dimensional distribution diagram. A, B and C respectively indicate regions in which mature red blood cells, reticulocytes, and blood platelets are classified. It is possible to obtain number of reticulocytes and a ratio of reticulocytes in the blood by calculating the number of particles in each of the regions.

It will be very beneficial if, in the two-dimensional distribution diagram, characteristics of each of the particle groups are evaluated more accurately, in addition to the simple classification of the particles into groups. Furthermore, it will be useful to medical purposes if new information regarding the particles, such as mean volume of reticulocytes, under such condition is obtained. The invention is intended to achieve requirements.

With regard to the above determination of the reticulocytes, it is considered that relative intensity of forward scattering light generally corresponds to a particular particle size. It is to be noted, however, that the above relative intensity does not accurately reflect individual particle sizes due to influence of particle shape, change in the degree of light absorption caused by difference in the degree of stain, or change in refractive index of particles.

An electric resistance method (electric impedance method), known, like a flow cytometry method mentioned above, as a method for analyzing particles such as blood cells, is believed in general to be superior in obtaining accurate volume of individual particles. According to the electric resistance method, electric current is supplied to an aperture so as to detect change in impedance occurring when a particle passes through the aperture.

It is assumed that a two-dimensional particle size distribution diagram accurately representing information regarding particle volume may be obtained when providing a composite detection apparatus in which electric resistance detection and optical detection are combined, so as to obtain a signal on the basis of change in the electric resistance, in place of using the scattering light detection. It is also assumed that new information regarding reticulocytes, which could not have been obtained heretofore, may be obtained.

Accordingly, it is a principal object of the invention to provide a method for obtaining a two-dimensional particle distribution diagram accurately representing volumetric information of reticulocytes, so as to obtain new information regarding volume and mean or average volume of reticulocytes from such a two-dimensional particle distribution diagram.

Reference is made to US-A-5006986, which belongs to the present applicants and which discloses a method for determining reticulocytes by means of a composite particle detection means including an aperture through which a flow of sample liquid containing blood specimen suspended therein passes, the aperture being illuminated by a light beam, the method comprising the steps of staining said reticulocytes in the blood specimen with a fluorescent dye, passing a flow of the sample liquid containing said reticulocytes through the aperture, detecting, with respect to individual particles passing through said aperture, a first signal on the basis of amount of fluorescence generated by said illumination of light beam, preparing a two-dimensional particle size distribution diagram using the intensity of said first signal as one axis of said diagram, classifying said reticulocytes in said two-dimensional particle size distribution into plural groups, and analyzing distribution mode of said classified reticulocytes groups so as to calculate a predetermined index number.

According to the invention, there is provided a method for determining a novel index number obtained from classified reticulocytes by means of a composite particle detection means including an aperture through which a flow of sample liquid containing blood specimen suspended therein passes, the aperture being illuminated by a light beam; said method comprising the steps of: staining said reticulocytes in the blood specimen with a fluorescent dye; passing a flow of said sample liquid containing said reticulocytes through said aperture using a sheath liquid as an outer layer; detecting, with respect to individual particles passing through said aperture, a first signal on the basis of amount of fluorescence generated by said illumination of light beam and a second signal on the basis of a change in electrical impedance using a pair of electrodes disposed upstream and downstream of the flow of sample liquid, respectively, with said aperture positioned therebetween; preparing a two-dimensional particle size distribution diagram using the intensity of said first signal as one axis of said diagram and the intensity of said second signal as the other axis of said diagram; classifying said reticulocytes in said two-dimensional particle size distribution; and analyzing the distribution mode of said classified reticulocytes group so as to calculate the index number.

Acridine orange and auramine O may be used as a fluorescent dye. Index numbers to be calculated include a ratio of reticulocytes in the blood sample, mean particle volume of reticulocytes, growth index of reticulocytes, mean volume of reticulocytes of different maturity levels. Specifically, a two-dimensional particle distribution diagram is prepared using signal intensity of electric impedance as Y-axis and fluorescent intensity as X-axis. Growth index of reticulocytes is obtained from inclination of reticulocytes distribution. The reticulocytes distribution is classified into several small regions depending upon fluorescent intensity, so as to calculate mean volume of reticulocytes of each of the small regions. Thus, volume of reticulocytes in each maturity level can be obtained.

For a better understanding of the invention, and to show how the same may be carried out into effect, reference will now be made, by way of example, to the accompanying drawings in which like reference numerals refer to like elements.

Fig. 1 is a perspective view illustrating a composite particle detection apparatus (means), in its entirety, for use in carrying out a method for determining reticulocytes in accordance with the invention.

Fig. 2 is a side elevational view, in section, of main part of the apparatus shown in Fig. 1.

Fig. 3 is an enlarged illustrative view of an aperture portion of the apparatus of Fig. 1

Fig. 4 illustrates a fluid circuit of the apparatus of Fig. 1 for supplying a sample liquid through the aperture using a sheath liquid as an outer layer.

Fig. 5 shows a two-dimensional particle distribution diagram in which measurement result in accordance with method of the invention is pictorially illustrated.

Fig. 6 shows a diagram for measurement result in accordance with the method of the invention.

Fig. 7 shows a two-dimensional particle distribution diagram obtained from a specimen suffering from iron deficiency anemia in accordance with the method of the invention.

Fig. 8 shows a two-dimensional particle distribution diagram in which measurement result in accordance with prior art method is illustrated.

Fig. 9 shows a two-dimensional particle distribution diagram illustrating prior art classifying method.

The invention will be explained in detail below with reference to several embodiments illustrated in the drawings.

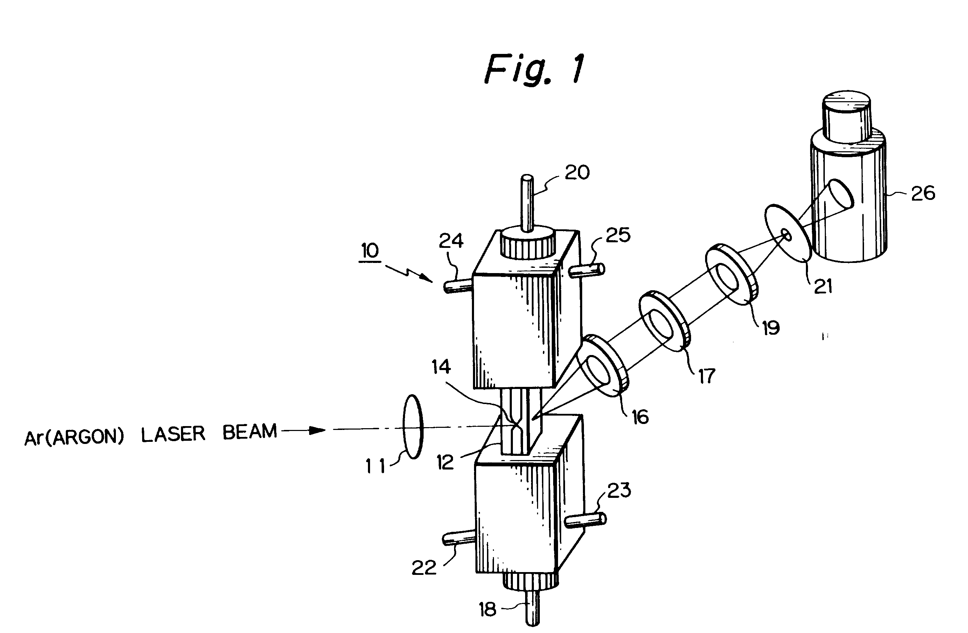

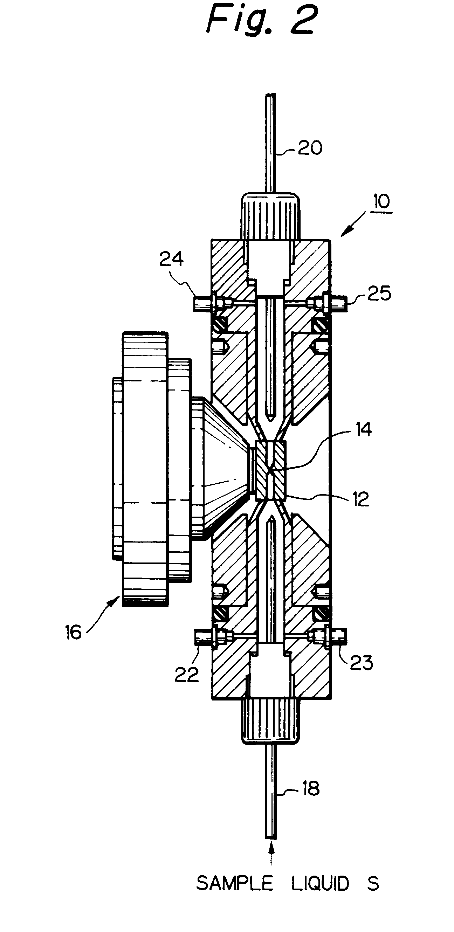

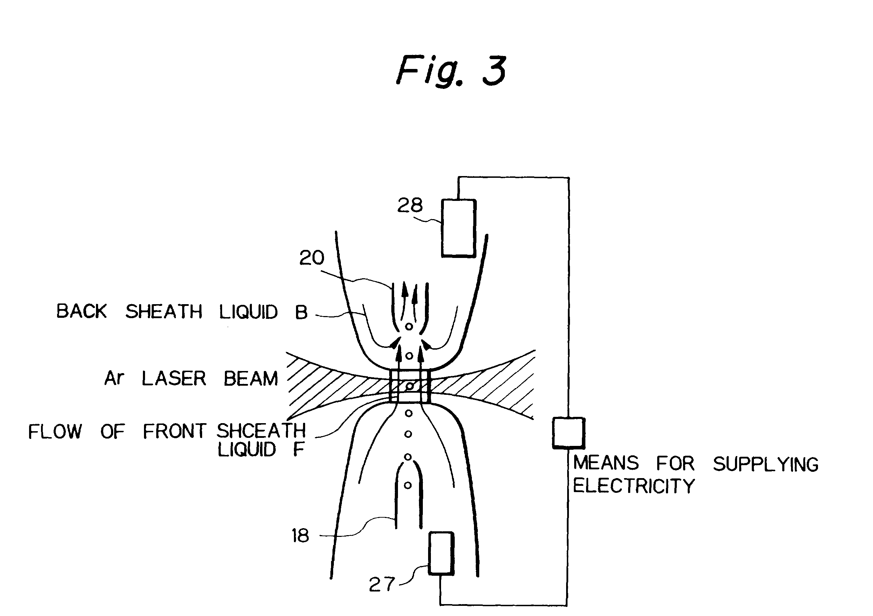

Fig. 1 is a generic perspective view of a composite particle detection apparatus or means for use in the method for determining reticulocytes or reticular cell according to the invention. Fig. 2 is a vertical sectional view of main part of the detection apparatus. Fig. 3 is an illustrative, enlarged view of a portion having a micropore or aperture therein of the detection apparatus of the invention.

A composite detection apparatus is disclosed for example in Japanese Patent Publication No. 56-13266 and United States Patent 3,710,933. In such an apparatus, a means for detecting an electric resistance and a means for conducting optical detection are disposed at different positions. Thus, it is necessary for such an apparatus to include a signal delay means so as to put signals from the electric means and the optical means in correspondent with each other. It is noted, however, that such a corresponding operation is difficult to be performed, since particles do not always flow in a constant manner. In order to obviate the above problem, Japanese Patent Publication No. 2-20053 discloses a composite detection apparatus in which detection for electric resistance and optical detection are carried out at same position so as to obtain signals regarding both electric resistance and optical detection.

A composite, particle detection apparatus shown in Fig. 1 is of a type in which electric resistance detection and optical detection are performed at the same location so as to obtain signals regarding both electric resistance and optical detection. The apparatus 10 includes a flow cell 12 made from fused quartz. A laser illuminated portion of the flow cell 12 onto which Ar (argon) laser beam is illuminated, i.e., a portion through which a flow of sample liquid S with a blood specimen suspended therein passes, is configured, for the purpose of simultaneous detection of electric resistance, to form a micropore 14 (hereinafter referred to as an aperture) in a rectangular parallelopiped form having, for example, sides in 100 micrometers and a length in 120 micrometers.

A lens 11 is disposed at a position opposite to one side surface of the flow cell 12. The lens 11 illuminates Ar laser beam onto the sample liquid S passing through the aperture 14. A conversing lens 16 is disposed at a position opposite to a side surface substantially perpendicular to the above one side surface of the flow cell 12. The conversing lens collects fluorescence emitted from stained or colored biological cells in the sample liquid S upon illumination of Ar laser beam. The fluorescence, having been collected by the converging lens 16, is directed through a wavelength selection filter 17, a lens 19 and a pinhole 21, for selection of necessary lights having a particular wavelength, to a photodetective sensor (such as photomultiplier) 26. The optical signal detected by the photodetective sensor 26 is converted into an electric signal.

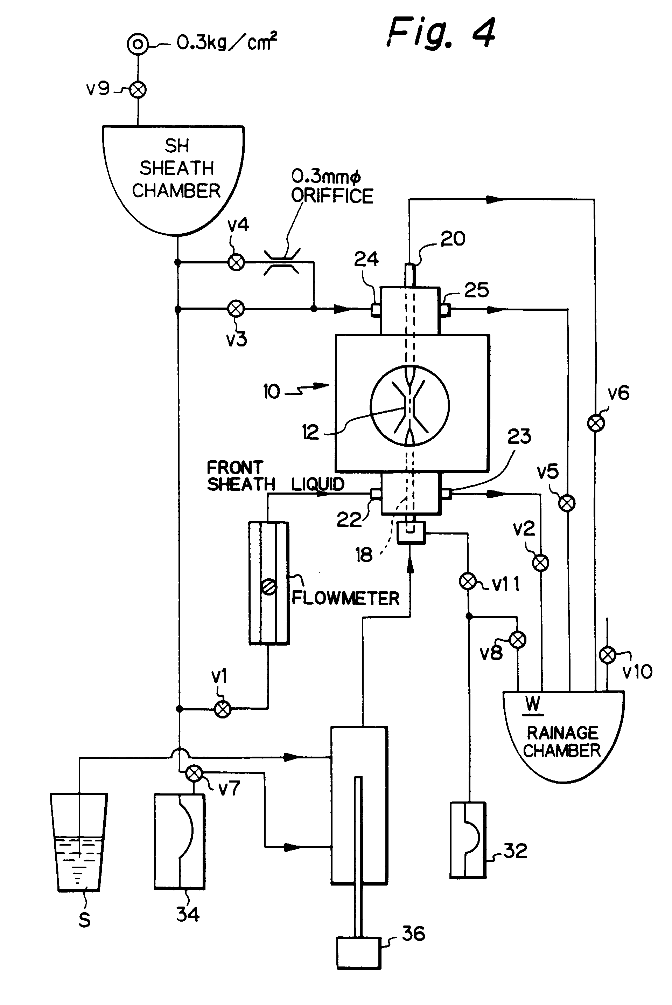

Fig. 4 illustrates a fluid circuit in the detection apparatus 10 for supplying a flow of the sample liquid S sheathed with a sheath liquid as an outer layer into the aperture 14. Prior to determination or measurement, valves V9, V3, V5, V1 and V2 are opened so as to clean or flush the inside of the apparatus 10 with a sheath liquid from a chamber Sh. When a valve V6 is opened, a cleaning pump 34 and a syringe 36 are communicated with each other by means of a valve V7, so as to put the cleaning pump 34 into a discharge mode. When determination is performed, a valve V11 is first opened, then a sample pump 32 is put into a suction mode, so as to direct the sample liquid S to a position adjacent a jet nozzle 18. Thereafter, valve V1, V4 and V6 are opened and the syringe 36 is put into a discharge mode. By this, the sample liquid S sheathed with a flow F of a front sheath liquid from a supply port 22 passes through the aperture 14 at its center in an aligned manner. The sample liquid, having passed through the aperture 14, is sheathed or encased with a flow B of a back sheath liquid from a supply port 24 and flows into a collection tube 20 for recovery.

As shown in Fig. 3, a pair of electrodes 27, 28 is disposed at upstream and downstream sides, respectively, of a flow of the sample liquid S in a confronting manner with the aperture 14 disposed therebetween. The electrode 27 is disposed so as to be in contact with the flow F of a front sheath liquid, while the electrode 28 is disposed so as to be in contact with the flow B of a back sheath liquid.

One embodiment of a method for determining reticulocytes by means of the apparatus 10 according to the invention will be explained below.

First, reticulocytes in a blood sample are stained with a suitable fluorescent dye so as to form a sample liquid S. Suitable fluorescent dyes may include acridine orange, auramine O, etc. Among the above fluorescent dyes, auramine O is specifically preferred to be used in determination of reticulocytes. Auramine O, when nonspecifically adsorbed to membrane of a mature red blood cell, emits weak fluorescence, while it emits specifically strong fluorescence when adsorbed to a reticulum of reticulocyte, thus permitting accurate determination of reticulocytes. In this regard, refer to Japanese Patent Publication No. 61-2805656. The sample liquid S including therein reticulocytes stained with auramine O may be prepared, for example, by adding 40 micro liters of a stain liquid of auramine O to 1,950 micro liters of a dilution liquid to be mixed well therewith, then, immediately adding 10 micro liters of blood into the mixed solution to be mixed therewith, and incubating the resulting solution or liquid at a temperature of 35 degrees (Celsius) for 30 seconds.

A flow of the sample liquid S containing reticulocytes is supplied to the aperture 14, using a sheath liquid as an outer layer. In this connection, it is noted that the sheath liquid is pressurized, for example, to 0.3 kg/sq. cm so as to be admixed with the sample liquid S ejected from the nozzle 18, thus forming a laminate flow. It is noted that quantity of the sample liquid to be discharged may be controlled so as to permit the cells passing through the aperture 14 to be aligned.

During the passage of the cells in the sample liquid through the aperture 14, Ar laser beam is illuminated onto the aperture 14. At the same time, a voltage is applied between the electrodes 26 and 27. Thus, a first signal and a second signal both relating to individual blood cells passing through the aperture may be obtained simultaneously, the first signal being based on a change in electric impedance and the second signal being based on an amount of fluorescence generated by means of illumination of Ar laser beam.

Next, a two-dimensional particle size distribution chart is prepared using intensity of each of the first and second signals as an axis.

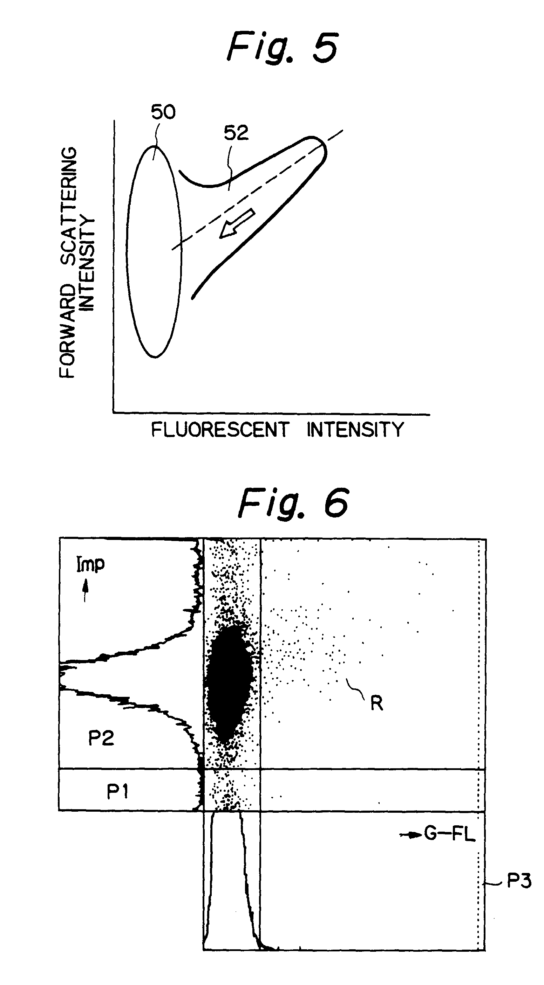

Fig. 6 shows the result obtained from the above method, while Fig. 5 shows a two-dimensional particle size distribution chart which diagrammatically illustrates the measurement result of Fig. 6. In Fig. 5, the horizontal axis (X-axis) represents intensity of fluorescence and the vertical axis (Y-axis) represents intensity of signals obtained by electric resistance method (electric impedance method).

In Fig. 6, mature red blood cells, reticulocytes and white blood cells are included in region P2. Platelets are included in region P1. It is seen in Fig. 6 that a group R (a group 52 in Fig. 5) extends in upward and right hand direction from a distribution of mature red blood cells which is a main distribution in Fig. 6 (a group 50 in Fig. 5). The group R is a group of reticulocytes. Inspection of the scatter diagram in detail reveals that the cells (reticulocytes) in region R have a fluorescent intensity proportional to the size thereof and increased electric impedance. A reticulocyte representing a greater fluorescent intensity is a red blood cell of lesser maturity. Thus, the above result implies that a reticulocyte of a lesser maturity has a larger cell volume. White blood cells are well stained with a fluorescent dye due to their richness in DNA and RNA. Thus, white blood cells represent increased fluorescent intensity and they therefore appear at position P3 at saturated level in the scatter diagram.

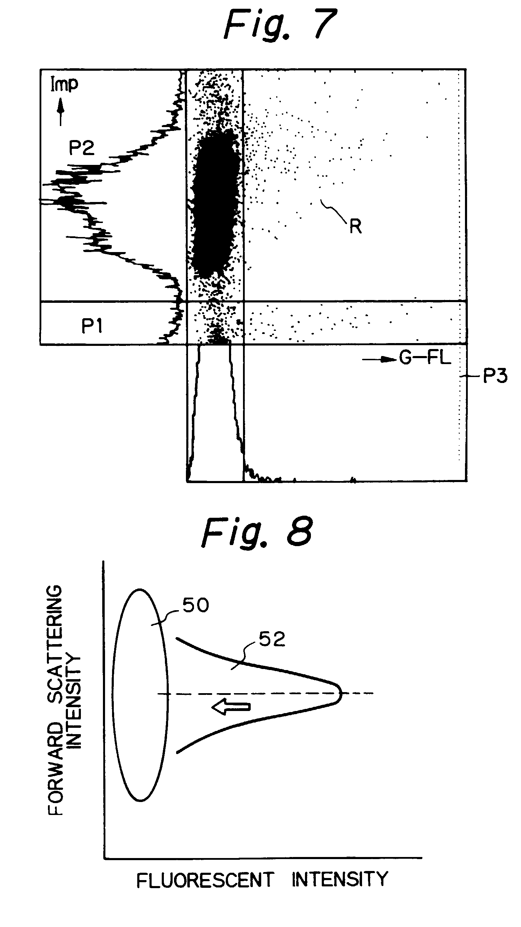

Fig. 7 illustrates an example in which blood sample obtained from a patient suffering from iron deficiency anemia and under treatment has been determined. It will be seen that a particle size distribution P2 of mature red blood cells has two peaks therein. The peak having a lower intensity of electric impedance signal is for mature red blood cells of a smaller cell volume which have been blood-formed prior to medical treatment, while the peak having a higher intensity of electric impedance signal is for normal, mature red blood cells of a larger cell volume which have been blood-formed after medical treatment. Most of the reticulocytes is related to the distribution of normal, red blood cells. It should be noted, however, that, though quite a little, there are reticulocytes which is related to the distribution of smaller red blood cells. This means that reticulocytes of a smaller size are initially formed in a patient suffering from iron deficiency anemia, even though he has normal blood formation ability. On the other hand, it is possible to determine whether a patient has a particular kind of disease from measurement of cell volume of reticulocytes.

Fig. 9 shows an example of measurement or determination for reticulocytes by means of a conventional method. Fig. 8 shows a two-dimensional particle size distribution chart in which the result shown in Fig. 9 is diagrammatically illustrated. The vertical axis (Y-axis) represents intensity of forward scattering lights and the horizontal axis (X-axis) represents intensity of fluorescence.

In Fig. 9, a distribution of reticulocytes (a group denoted by numeral 52 in Fig. 8) lies substantially parallel with the horizontal axis. This is because that a signal of forward scattering light does not sufficiently reflect information regarding a size of cells. On the contrary, electric impedance signals in Fig. 6 accurately represent each cell volumes, thus giving a distribution having an inclination.

The two-dimensional distribution diagram in Fig. 6 is analyzed so as to calculate or obtain number of reticulocytes, ratio of reticulocytes, mean volume of reticulocytes, growth index of reticulocytes, number of reticulocytes of different maturity, and mean volume of reticulocytes of different maturity.

Calculation of number of reticulocytes and ratio of reticulocytes can be conducted using known method (refer to Japanese Patent Public Disclosure No. 1-308964.)

Mean volume of reticulocytes is obtained by calculating average intensity of electric impedance signals from cells which have been identified to be a reticulocyte. Mean volume of reticulocytes regarding normal specimen usually takes a value with a predetermined range. Accordingly, it is possible to determine whether the specimen concerned is normal or abnormal on the basis of mean volume of reticulocytes obtained.

A method for calculating growth index of reticulocytes will be explained below.

An inclination or angle of a group of cells which have been identified to be a reticulocyte in the two-dimensional particle size distribution diagram will be decreased in accordance with maturity of such reticulocytes, so that it represents initial size of a reticulocyte appearing in blood in peripheral vessel and a speed of decrease in its volume in accordance with its maturity. An inclination regarding normal specimen, of course, represents a constant value. Thus, a specimen having an inclination which is not constant is determined to have possible disease.

It is noted that initial size of a reticulocyte appearing in peripheral vessel is represented by the value of Y-axis at the saturated value of X-axis in the regression line the inclination or angle of which has been obtained in the above. Thus, it is possible to anticipate occurrence of red blood cells of larger and smaller sizes which will be maturized. This greatly contributes to clinical measurement.

Number of reticulocytes of different maturities, and means volume of reticulocytes of different maturities can be obtained by classifying the cell groups having been determined to be a reticulocyte by means of the two-dimensional particle distribution diagram into several levels depending upon their respective fluorescent intensities, and then calculating number of reticulocytes and mean particle volume with respect to individual groups.

The information regarding mean particle volume of reticulocytes, growth index of reticulocytes, number of reticulocytes of different maturity levels, and means volume of reticulocytes of different maturity levels is a new information which could not have been obtained or measured by means of existing apparatus and it is, therefore, quite beneficial on determination of patients suffering from anemia.

As explained in the above, it is possible, in accordance with the invention, to determine reticulocytes and red blood cell reproducibility of a patient by obtaining proper information regarding particle volume of reticulocytes. At the same time, new information regarding number, ratio and volume of reticulocytes of different levels makes it possible to determine blood formation capability of the bone marrow of a patient.

The principles, preferred embodiments and modes of operation of the present invention have been described in detail in the foregoing specification. It should be noted, however, that variations and changes may be made by those skilled in the art without departing from the present invention. Accordingly, the foregoing detailed description should be regarded as exemplary in nature and not as limiting the scope of the invention set forth in the appended Claims.

## Claims

1. A method for determining a novel index number obtained from classified reticulocytes by means of a composite particle detection means including an aperture (14) through which a flow of sample liquid containing blood specimen suspended therein passes, the aperture (14) being illuminated by a light beam; said method comprising the steps of:
staining said reticulocytes in the blood specimen with a fluorescent dye;
passing a flow of said sample liquid containing said reticulocytes through said aperture (14) using a sheath liquid (F) as an outer layer;
detecting, with respect to individual particles passing through said aperture, a first signal on the basis of amount of fluorescence generated by said illumination of light beam and a second signal on the basis of a change in electrical impedance using a pair of electrodes (27, 28) disposed upstream and downstream of the flow of sample liquid, respectively, with said aperture (14) positioned therebetween;
preparing a two-dimensional particle size distribution diagram using the intensity of said first signal as one axis of said diagram and the intensity of said second signal as the other axis of said diagram;
classifying said reticulocytes in said two-dimensional particle size distribution; and
analyzing the distribution mode of said classified reticulocytes group so as to calculate the index number.

2. The method in accordance with Claim 1, wherein said index number to be calculated is mean volume of reticulocytes.

3. The method in accordance with Claim 1, wherein said analyzing the distribution mode of said classified reticulocytes is to obtain the regression line regarding the distribution of reticulocytes, and wherein said index number to be calculated is growth index of reticulocytes depending on an inclination of the regression line.

4. The method in accordance with Claim 1, wherein said analyzing the distribution mode of said classified reticulocytes is to classify a plurality of groups of reticulocytes each of which has a different maturity level in accordance with intensity of fluorescence, and wherein said index number to be calculated is mean volume of reticulocytes of the different maturity levels.

5. The method in accordance with any one of Claims 2 to 4, wherein acridine orange or auramine 0 is used as said fluorescent dye.

## Patentansprüche

1. Verfahren zur Bestimmung einer neuen aus klassifizierten Retikulocyten erhaltenen Kennzahl mittels einer Teilchenbestimmungsvorrichtung, die eine Öffnung (14) umfaßt, durch die ein Probenflüssigkeitsstrom, der eine darin suspendierte Blutprobe enthält, hindurchströmt, wobei die Öffnung (14) mittels eines Lichtstrahles bestrahlt wird, dadurch gekennzeichnet, daß das Verfahren die Stufen umfaßt:
Anfärben der Retikulocyten in der Blutprobe mit einem Fluoreszenzfarbstoff;
Hindurchführen eines Probenflüssigkeitsstromes, der die Retikulocyten enthält, durch die Öffnung (14) unter Verwendung einer Umhüllungsflüssigkeit (F) als äußere Schicht;
Bestimmen eines ersten Signals auf der Basis der Menge der durch die Bestrahlung mit dem Lichtstrahl erzeugten Fluoreszenz und eines zweiten Signals auf der Basis einer Veränderung in der elektrischen Impedanz unter Verwendung eines stromaufwärts bzw. stromabwärts vom Flüssigkeitsstrom angeordneten Elektrodenpaares (27, 28), wobei die Öffnung (14) dazwischen angeordnet ist, auf der Grundlage der durch diese Öffnung hindurchströmenden individuellen Teilchen;
Herstellen eines zweidimensionalen Teilchengrößenverteilungsdiagramms unter Verwendung der Intensität des ersten Signals als eine Achse des Diagramms und der Intensität des zweiten Signals als andere Achse des Diagramms;
Klassifizieren der Retikulocyten in der zweidimensionalen Teilchengrößenverteilung; und
Analysieren des Verteilungsmodus der klassifizierten Retikulocytengruppe, um die Kennzahl zu bestimmen.

2. Verfahren nach Anspruch 1, dadurch gekennzeichnet, daß die zu bestimmende Kennzahl das mittlere Volumen der Retikulocyten ist.

3. Verfahren nach Anspruch 1, dadurch gekennzeichnet, daß die Analyse des Verteilungsmodus der klassifizierten Retikulocyten durchgeführt wird, um die Regressionslinie im Hinblick auf die Verteilung der Retikulocyten zu erhalten, und die zu bestimmende Kennzahl der Wachstumsindex der Retikulocyten, der von der Neigung der Regressionslinie abhängt, ist.

4. Verfahren nach Anspruch 1, dadurch gekennzeichnet, daß die Analyse des Verteilungsmodus der klassifizierten Retikulocyten durchgeführt wird, um in Übereinstimmung mit der Intensität der Fluoreszenz eine Vielzahl von Retikulocytengruppen zu klassifizieren, von denen jede einen verschiedenen Reifegrad besitzt, und die zu bestimmende Kennzahl das mittlere Volumen der Retikulocyten der verschiedenen Reifegrade ist.

5. Verfahren nach einem der Ansprüche 2 bis 4, dadurch gekennzeichnet, daß als Fluoreszenzfarbstoff Acridinorange oder Auramin O verwendet wird.

## Revendications

1. Procédé de détermination d'un nouveau chiffre d'indice, obtenu à partir de réticulocytes classés, à l'aide d'un moyen composite de détection de particule comportant une ouverture (14) à travers laquelle passe un écoulement de liquide échantillon contenant un prélèvement sanguin en suspension dans celui-ci, l'ouverture (14) étant éclairée par un faisceau lumineux; ledit procédé comprenant les étapes suivantes:
coloration desdits réticulocytes contenus dans le prélèvement sanguin avec un colorant fluorescent;
passage d'un écoulement dudit liquide échantillon contenant lesdits réticulocytes à travers ladite ouverture (14) en utilisant un liquide de protection (F) en tant que couche extérieure;
détection, par rapport à des particules individuelles passant par ladite ouverture, d'un premier signal sur la base du niveau de fluorescence générée par ledit éclairage du faisceau lumineux et d'un deuxième signal sur la base de la variation de l'impédance électrique, en utilisant une paire d'électrodes (27, 28) disposées respectivement en amont et en aval de l'écoulement du liquide échantillon, ladite ouverture (14) étant disposée entre elles;
préparation d'un diagramme de répartition des dimensions des particules à deux dimensions, en utilisant l'intensité dudit premier signal comme un axe dudit diagramme et l'intensité dudit deuxième signal comme l'autre axe dudit diagramme;
classement desdits réticulocytes dans ladite répartition des dimensions des particules selon deux dimensions; et
analyse du mode de répartition dudit groupe de réticulocytes classés, de manière à calculer le chiffre d'indice.

2. Procédé selon la revendication 1, dans lequel ledit chiffre d'indice à calculer est le volume moyen des réticulocytes.

3. Procédé selon la revendication 1, dans lequel ladite analyse du mode de répartition desdits réticulocytes classés consiste à obtenir la ligne de régression concernant la répartition des réticulocytes, et dans lequel le chiffre d'indice à calculer est l'indice de croissance de réticulocytes en fonction de l'inclinaison de la ligne de régression.

4. Procédé selon la revendication 1, dans lequel ladite analyse du mode de répartition desdits réticulocytes classés consiste à classer une pluralité de groupes de réticulocytes, chacun d'eux ayant un niveau de maturité différent, en fonction de l'intensité de fluorescence, et dans lequel ledit chiffre d'indice à calculer est le volume moyen des réticulocytes de différents niveaux de maturité.

5. Procédé selon l'une quelconque des revendications 2 à 4, dans lequel de l'orange-acridine ou de l'auramine 0 est utilisée comme colorant fluorescent.
